(19) Europäisches Patentamt
European Patent Office
Office européen des brevets

(11) EP 1 271 359 A2

(12) EUROPEAN PATENT APPLICATION

(43) Date of publication:
**02.01.2003 Bulletin 2003/01**

(51) Int Cl.[7]: **G06F 17/30**, G11B 27/10

(21) Application number: **02254466.2**

(22) Date of filing: **26.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.06.2001 JP 2001193465**
**28.09.2001 JP 2001304361**

(71) Applicant: **Pioneer Corporation**
**Tokyo-to (JP)**

(72) Inventors:
- **Nakamura, Takeshi, C/o Pioneer Corporation Tsurugashima-shi, Saitama-ken (JP)**
- **Hashimoto, Michikazu, C/o Pioneer Corporation Tsurugashima-shi, Saitama-ken (JP)**
- **Miyasato, Hajime, C/o Pioneer Corporation Tsurugashima-shi, Saitama-ken (JP)**
- **Tabata, Toshio, C/o Pioneer Corporation Tsurugashima-shi, Saitama-ken (JP)**

(74) Representative: **Haley, Stephen**
**Gill Jennings & Every,**
**Broadgate House,**
**7 Eldon Street**
**London EC2M 7LH (GB)**

# (54) Apparatus and method for summarizing video information, and processing program for summarizing video information

(57) A summary reproducing apparatus (100) includes a detection unit (103) for detecting silent and noise sections based on information on sound waveforms of inputted audio/video information, and a control unit (107) for deciding digest segments to be extracted while controlling a reproduction unit (106) based on the digest segments. The control unit (107) sets the digest segments and the importance of each of the digest segments based on the time-base position and/or section length of each of the silent and noise sections in the audio/video information. Based on the set importance of each of the digest segments, the control unit (107) then controls the reproduction unit 106 to play a digest of the audio/video information.

EP 1 271 359 A2

Printed by Jouve, 75001 PARIS (FR)

## Description

The present invention relates to the technical field of apparatuses for reproducing and playing a summary of video information to which sound is added. More particularly, it relates to the field of technology for selection of partial video information to be extracted at the time of summary reproduction on the basis of the sound level.

As recording apparatuses such as VTRs (Video Tape Recorder (VCR)) for recording and reproducing video information like a television broadcasting program have recently become widespread, digest reproduction (summary reproduction) has been in practical use. The summary reproduction provides a quick sight of video information summarized in short time to eliminate the need to view all the recorded video information.

Methods for performing summary reproduction include, for example, a summary reproducing method in which scene-changed parts (scene changes) are detected by focusing mainly on the video information itself, and a method for performing summary reproduction by focusing on audio information added to the video information. A typical example of the method for performing summary reproduction by focusing on the audio information is disclosed in Japanese Laid-Open Patent Application No. Hei 10-32776.

As shown in FIG. 9, a summary reproducing apparatus 1 disclosed in the Japanese Laid-Open Patent Application includes the following: a sound level detecting means 3 for detecting the sound level of video information provided over a communication line or airwaves together with audio information added to the video information (hereinafter called audio/video information); a comparator for comparing the sound level with a reference sound level; a duration timer 5 for measuring the duration of time during which the sound level exceeds the reference sound level; a digest address generating means 8 for generating addresses of digest parts from the duration measured by the duration timer 5; a recording/reproducing means 9 for recording the addresses; a digest address reproducing means 11 for reproducing the addresses recorded; and a replay control means 10 for playing the digest parts of the audio/video information on the basis of the addresses.

According to the above-mentioned configuration, when the inputted audio/video information lasts for a preset period of time during which the sound level of the audio/video information exceeds the reference sound level, the summary reproducing apparatus 1 records the addresses at which the sound level becomes higher than the reference sound level. Then, the summary reproducing apparatus 1 extracts, based on the addresses, the parts the sound level of which becomes higher than the reference sound level to reproduce a summary of the audio/video information from the extracted parts.

However, in the above-mentioned summary reproducing method, only the parts the sound level of which becomes higher than the reference sound level are used as feature parts of the audio/video information without the use of silent parts of the audio/video information as its feature parts. This causes a problem of being incapable of performing proper summary reproduction.

An audio part the sound level of which is high (hereinafter called a noise section) indicates an exciting part, and hence a feature part of the video information. On the other hand, a soundless, silent part (hereinafter called a silent section) indicates a part that changes scene or switches the contents. From this point of view, it can be said that the silent section is also an important feature part of the video information. When the contents are switched in the video information, the immediately following part is the beginning part of the next contents and often gives a short summary or outline of the contents concerned.

Thus, the above-mentioned summary reproducing method can extract exciting scenes, but not all the scene change parts or the parts that switch the contents, resulting in the problem of being incapable of performing proper summary reproduction.

Further, since the above-mentioned summary reproducing method is to play, at the time of digest viewing, all the parts of the audio/video information that have sound levels higher than the reference sound level, it has another problem that the audio/video information may not be summarized in a playing time required by a user or preset playing time.

The present invention has been made in consideration of the above problems, and it is an object thereof to provide digest information extracted as feature amounts from silent parts in addition to noise parts so that an operator can grasp video information more appropriately while controlling digest playing time.

The above object of the present invention can be achieved by a video information summarizing apparatus of the present invention for extracting one or more pieces of partial video information as some parts of video information based on audio information from the video information to which the audio information is added so that digest information summarized in shorter time than the video information will be generated from the video information on the basis of the partial video information extracted. The apparatus is provided with: a classification device for classifying the video information into plural sound sections on the basis of the sound levels in the audio information; a decision device for deciding the partial video information to be extracted on the basis of at least either the time-base position or the time length of at least any one of the plural types of sound sections classified in the video information; and a generation device for extracting the decided partial video information from the video information to generate the digest information.

According to the present invention, the classification device classifies the video information into plural sound sections on the basis of the sound levels in the audio information, the decision device decides the partial video information to be extracted on the basis of at least either the time-base position or the time length of at least any one of the plural types of sound sections classified in the video information, and the generation device generates the digest information summarized in shorter time than the video information on the basis of the partial video information.

In general, since the audio information added to the video information shows feature parts such as exciting parts of a program, scene change parts, and parts that switch program contents, it plays an important role in summarizing the video information in shorter time.

Therefore, since the partial video information to be extracted can be decided on the basis of the plural sound sections classified by sound level, both the exciting parts and the parts that switch program contents can be extracted as the partial video information, thereby obtaining digest information that enables the user to grasp the contents unerringly in short time.

In one aspect of the present invention, the decision device decides at least either the start time or the stop time of the partial video information on the basis of at least either the time-base position or the time length of at least any one of the plural types of sound sections classified in the video information.

According to this aspect, the decision device decides at least either the start time or the stop time of the partial video information on the basis of at least either the time-base position or the time length of at least any one of the plural types of sound sections classified in the video information.

Therefore since the plural types of sound sections classified by sound level show exciting parts of the video information, scene change parts, and parts that switch contents, these feature parts can be extracted as the partial video information unerringly on the basis of the plural types of sound sections classified by sound level, thereby obtaining appropriate digest information that enables the user to grasp the contents unerringly in short time.

In another aspect of the present invention, the classification device classifies on the basis of the sound levels the video information into at least soundless, silent sections and noise sections that fall within a preset range of sound levels.

According to this aspect, the classification device classifies on the basis of the sound levels the video information into at least soundless, silent sections and noise sections that fall within a preset range of sound levels.

In general, both the silent and noise sections play important roles in summarizing the video information in shorter time. For example, in a television broadcasting program, a noise section higher in sound level than a preset level indicates an exciting part of the program, while a silent section preset in level as being soundless indicates a scene change or a part that switches program contents.

Therefore, since the partial video information to be extracted can be decided on the basis of either the silent section or the noise section, both the exciting part of the video information and the part that switches program contents can be extracted as the partial video information, thereby obtaining summarized video information that enables the user to grasp the contents unerringly in short time.

In further aspect of the present invention, the decision device sets the start time of the partial video information at a time-base position that shows the end of a corresponding silent section having a preset time length.

According to this aspect, the decision device sets the start time of the segment at a time-base position that shows the end of a corresponding silent section having a preset time length.

In the video information to which the audio information is added, since the soundless, silent section indicates a scene change part or a part that switches contents, the part that immediately follows the silent section becomes the beginning part of the next contents. Further, since the beginning part often gives a short summary or outline of the contents, it becomes a feature part of the video information.

Therefore, since the start time of the partial video information can be set at the end position of the silent section, the partial video information that forms a feature part of the video information can be extracted unerringly.

In further aspect of the present invention, after setting the start time of the partial video information based on the silent section, the decision device sets the stop time of the partial video information based on the time-base position of another silent section detected immediately after the silent section concerned.

According to this aspect, after setting the start time of the partial video information based on the silent section, the decision device sets the stop time of the partial video information based on the time-base position of another silent section detected immediately after the silent section concerned.

If the program is a news program, the silent section that follows the start time on the time axis will be positioned immediately after the outline part of the next news contents, while even if the program is not news, it is positioned immediately after the outline part of the next program contents. In other words, the position of the silent section on the time axis immediately follows the outline part as a feature part, and it is a good place to leave off, indicating such proper timing that the user will not feel something wrong at all even if the part is cut.

Therefore, since the stop time can be set on the basis of the silent section that follows the start time of the partial video information, the partial video information can be extracted at such proper timing that the user can view the outline of the feature part without a feeling of wrongness because the silent section is a good place to leave off. Thus, digest information capable of telling the user the video information accurately can be obtained.

In further aspect of the present invention, the decision device sets the start time of the partial video information based on the time-base position that shows the start of a noise section having a preset time length.

According to this aspect, the decision device sets the start time of the partial video information based on the time-base position that shows the start of a noise section having a preset time length.

In the video information, the noise section is an exciting part, that is, a feature part of the video information, and especially the start position of the noise section plays an important role in grasping the contents.

Therefore, since the start time of the partial video information can be set at the start position of the noise section, the partial video information that forms a feature part of the video information can be extracted unerringly.

In further aspect of the present invention, after deciding the start time of the partial video information based on the noise section, the decision device sets the stop time of the partial video information based on the time length of the noise section concerned.

According to this aspect, after deciding the start time of the partial video information based on the noise section, the decision device sets the stop time of the partial video information based on the time length of the noise section concerned.

Therefore, since the end position of the exciting part or feature part of the video information can be set unerringly for the partial video information, the partial video information can be extracted at such proper timing that the user will not feel something is wrong at all, thereby obtaining digest information capable of telling the user the video information accurately.

In further aspect of the present invention, the decision device sets, within a preset time range, the time length of the partial video information to be extracted.

According to this aspect, the decision device sets, within a preset time range, the time length of the partial video information to be extracted.

If one piece of partial video information to be extracted is too short, the user cannot understand the part of the video information. On the other hand, unnecessarily long time length could contain a lot of needless information, and an increase in information amount makes it impossible to summarize the video information unerringly. Therefore, it is necessary to set a proper length for the time length of the partial video information in order to let the user know the contents of the entire video information properly from the summarized video information.

Therefore, since a time length enough for the user to understand the contents of the extracted partial video information can be secured while preventing the time length of the partial video information from becoming unnecessarily long, digest information that enables the user to grasp the video information accurately can be obtained.

In further aspect of the present invention, the decision device sets the importance of the partial video information based on at least either the type or the time length of the sound section used as reference to the decision of the partial video information to be extracted, and the generation device makes a summary of the video information by extracting the partial video information on the basis of the set importance of the partial video information.

According to this aspect, the decision device sets the importance of the partial video information based on either the type or the time length of the sound section used as reference to the decision of the partial video information to be extracted, and the generation device makes a summary of the video information by extracting the partial video information on the basis of the set importance of the partial video information.

Therefore, since the video information is summarized on the basis of the importance of the partial video information, digest information capable of corresponding to a shorter time length specified by the user or preset shorter time length in which the video information is to be summarized can be obtained.

In further aspect of the present invention, the decision device sets more importance to the partial video information based on the silent section than that of the partial video information based on the noise section.

According to this aspect, more importance is given to the partial video information based on the silent section than that of the partial video information based on the noise section.

Although both the noise and silent sections are feature parts of the video information, the noise section indicates an exciting part of the video information, while the silent section indicates a scene change part or a part that switches contents in the video information. Therefore, the partial video information based on the silent section is of more importance than that of the noise section.

Therefore, since more importance can be given to the silent section than the noise section, the noise section can bring its importance into balance with that of the noise section, thereby obtaining unerring digest information.

In further aspect of the present invention, when the decided plural pieces of partial video information coincide with one another, the decision device merges the coincident pieces of partial video information into a piece of partial video information, and sets the importance of the merged partial video information based on the importance of each piece of partial video information being merged at present.

According to this aspect, when the decided plural pieces of partial video information coincide with one another, the decision device merges the coincident pieces of partial video information into a piece of partial video information, and sets the importance of the merged partial video information based on the importance of each piece of partial video information being already merged.

Since such a part that one piece of partial video information coincides with another piece or other pieces of partial video information is composed of plural feature parts, this part can be determined to be an important feature part in the video information.

Therefore, since the plural pieces of partial video information that coincide with one another can be merged to extract a piece of partial video information as an important feature part of the video information, digest information can be obtained unerringly. Further, since the importance of the partial video information extracted can be set on the basis of the importance of each of the plural partial video information being already merged, appropriate digest video information that enables the user to grasp the contents in short time can be obtained.

The above object of the present invention can be achieved by a video information summarizing method of the present invention for extracting, based on audio information, one or more pieces of partial video information as some parts of video information from the video information to which the audio information is added so that digest information summarized in shorter time than the video information will be generated from the video information on the basis of the partial video information extracted. The method is provided with: a classification process of classifying the video information into plural sound sections on the basis of the sound levels in the audio information; a decision process of deciding the partial video information to be extracted on the basis of at least either the time-base position or the time length of at least any one of the plural types of sound sections classified in the video information; and a generation process of extracting the decided partial video information from the video information and generate the digest information.

According to the present invention, the classification process is to classify the video information into plural sound sections on the basis of the sound levels in the audio information, the decision process is to decide the partial video information to be extracted on the basis of at least either the time-base position or the time length of at least any one of the plural types of sound sections classified in the video information, and the generation process is to generate digest information summarized in shorter time than the video information on the basis of the partial video information.

In general, since the audio information added to the video information shows feature parts such as exciting parts of a program, scene change parts, and parts that switch program contents, it plays an important role in summarizing the video information in shorter time.

Therefore, since the partial video information to be extracted can be decided on the basis of the plural sound sections classified by sound level, both the exciting parts and the parts that switch program contents can be extracted as the partial video information, thereby obtaining digest information that enables the user to grasp the contents unerringly in short time.

In one aspect of the present invention, the decision process decides at least either the start time or the stop time of the partial video information on the basis of at least either the time-base position or the time length of at least any one of the plural types of sound sections classified in the video information.

According to this aspect, the decision process is to decide at least either the start time or the stop time of the partial video information on the basis of at least either the time-base position or the time length of at least any one of the plural types of sound sections classified in the video information.

Therefore, since the plural types of sound sections classified by sound level show exciting parts of the video information, scene change parts, and parts that switch contents, these feature parts can be extracted as the partial video information unerringly on the basis of the plural types of sound sections classified by sound level, thereby obtaining appropriate digest information that enables the user to grasp the contents unerringly in short time.

In another aspect of the present invention, the classification process classifies on the basis of the sound levels the video information into at least soundless, silent sections and noise sections that fall within a preset range of sound levels.

According to this aspect, the classification process is to classify on the basis of the sound levels the video information into at least soundless, silent sections and noise sections that fall within a preset range of sound levels.

In general, both the silent and noise sections play important roles in summarizing the video information in shorter time. For example, in a television broadcasting program, a noise section higher in sound level than a preset sound level indicates an exciting part of the program, while a silent section preset in level as being soundless indicates a scene change or a part that switches program contents.

Therefore, since the partial video information to be extracted can be decided on the basis of either the silent section or the noise section, both the exciting part of the video information and the part that switches program contents can be extracted as partial video information, thereby obtaining summarized video information that enables the user to grasp the contents unerringly in short time.

In further aspect of the present invention, the decision process sets the importance of the partial video information based on at least either the type or the time length of the sound section used as reference to the decision of the partial video information to be extracted, and the generation process makes a summary of the video information by extracting the partial video information on the basis of the set importance of the partial video information.

According to this aspect, the decision process is to set the importance of the partial video information based on at least either the type or the time length of the sound section used as reference to the decision of the partial video information to be extracted, and the generation process is to make a summary of the video information by extracting the partial video information on the basis of the set importance of the partial video information.

Therefore, since the video information can be summarized on the basis of the importance of the partial video information, digest information capable of corresponding to a shorter time length specified by the user or preset shorter time length in which the video information is to be summarized can be obtained.

The above object of the present invention can be achieved by a video information summarizing program of the present invention embodied in a recording medium which can be read by a computer in a video information summarizing apparatus for extracting, based on audio information, one or more pieces of partial video information as some parts of video information from the video information to which the audio information is added so that digest information summarized in shorter time than the video information will be generated from the video information on the basis of the partial video information extracted. The program causes the computer to function as: a classification device for classifying the video information into plural sound sections on the basis of the sound levels in the audio information; a decision device for deciding the partial video information to be extracted on the basis of at least either the time-base position or the time length of at least any one of the plural types of sound sections classified in the video information; and a generation device for extracting the decided partial video information from the video information to generate the digest information.

According to the present invention, the computer classifies the video information into plural sound sections on the basis of the sound levels in the audio information, decides the partial video information to be extracted on the basis of at least either the time-base position or the time length of at least any one of the plural types of sound sections classified in the video information, and generates digest information summarized in shorter time than the video information on the basis of the partial video information.

In general, since the audio information added to the video information shows feature parts such as exciting parts of a program, scene change parts, and parts that switch program contents, it plays an important role in summarizing the video information in shorter time.

Therefore, since the partial video information to be extracted can be decided on the basis of the plural sound sections classified by sound level, both the exciting parts and the parts that switch program contents can be extracted as the partial video information, thereby obtaining digest information that enables the user to grasp the contents unerringly in short time.

In one aspect of the present invention, the decision device that decides at least either the start time or the stop time of the partial video information on the basis of at least either the time-base position or the time length of at least any one of the plural types of sound sections classified in the video information.

According to this aspect, the computer decides at least either the start time or the stop time of the partial video information on the basis of at least either the time-base position or the time length of at least any one of the plural types of sound sections classified in the video information.

Therefore, since the plural types of sound sections classified by sound level show exciting parts of the video information, scene change parts, and parts that switch contents, these feature parts can be extracted as the partial video information unerringly on the basis of the plural types of sound sections classified by sound level, thereby obtaining appropriate digest information that enables the user to grasp the contents unerringly in short time.

In another aspect of the present invention, the classification device that classifies on the basis of the sound levels the video information into at least soundless, silent sections and noise sections that fall within a preset range of sound levels.

According to this aspect, the computer classifies on the basis of the sound levels the video information into at least soundless, silent sections and noise sections that fall within a preset range of sound levels.

In general, both the silent and noise sections play important roles in summarizing the video information in shorter time. For example, in a television broadcasting program, a noise section higher in sound level than a preset sound level indicates an exciting part of the program, while a silent section preset in level as being soundless indicates a scene change or a part that switches program contents.

Therefore, since the partial video information to be extracted can be decided on the basis of either the silent section or the noise section, both the exciting part of the video information and the part that switches program contents can be extracted as partial video information, thereby obtaining summarized video information that enables the user to grasp the contents unerringly in short time.

In further aspect of the present invention, the decision device that sets the importance of the partial video information based on at least either the type or the time length of the sound section used as reference to the decision of the partial video information to be extracted, and the generation device that makes a summary of the video information by extracting the partial video information on the basis of the set importance of the partial video information.

According to this aspect, the computer sets the importance of the partial video information based on at least either the type or the time length of the sound section used as reference to the decision of the partial video information to be extracted, and makes a summary of the video information by extracting the partial video information on the basis of the set importance of the partial video information.

Therefore, since the video information can be summarized on the basis of the importance of the partial video information, digest information capable of corresponding to a shorter time length specified by the user or preset shorter time length in which the video information is to be summarized can be obtained.

**In the Drawings;**

FIG.1 is a block diagram showing the structure of a summary reproducing apparatus according to an embodiment of the present invention;
FIG. 2 is a graph for explaining how to detect a silent section and a nose section according to the embodiment;
FIG. 3 is a diagram for explaining how to decide the start time and stop time of a segment based on the noise section;
FIG. 4 is a diagram for explaining how to decide the start and stop time of a segment based on the silent section;
FIG. 5 is a flowchart showing a digest-segment decision operation for summary reproduction according to the embodiment;
FIG. 6 is a flowchart showing a setting operation on the stop time of a digest segment decided on the basis of the noise section in the summary reproduction operation according to the embodiment;
FIG. 7 is a flowchart showing a setting operation on the stop time of a digest segment decided on the basis of the silent section in the summary reproduction operation according to the embodiment;
FIG. 8 is a graph for explaining how to detect plural noise sections according to the embodiment; and

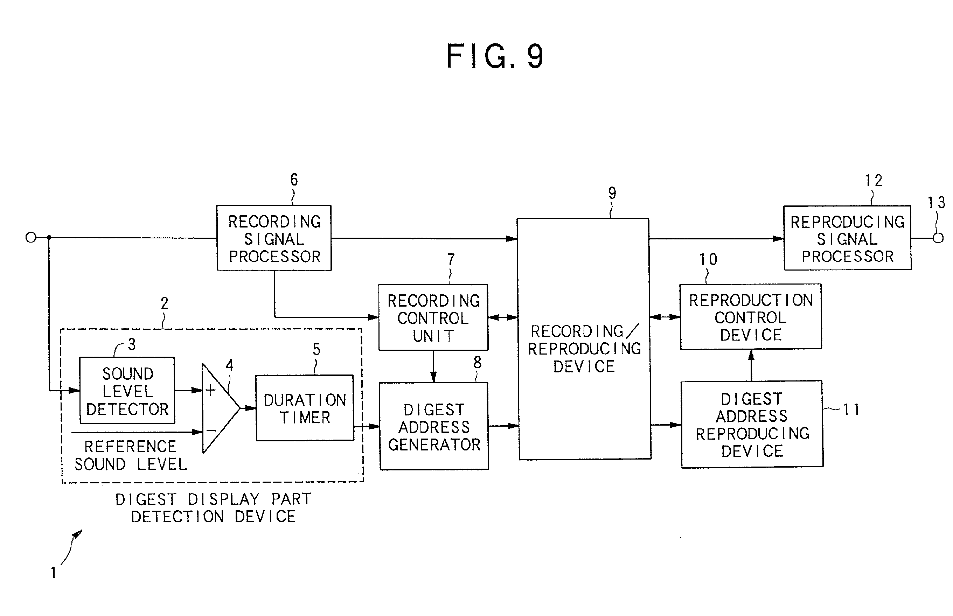

FIG. 9 is a block diagram showing the structure of a conventional summary reproducing apparatus.

A preferred embodiment of the present invention will now be described on the basis of the accompanying drawings.

The embodiment is carried out by applying the present invention to a summary reproducing apparatus for summarizing and reproducing audio and video information such as a television broadcasting program provided over a communications line or airwaves.

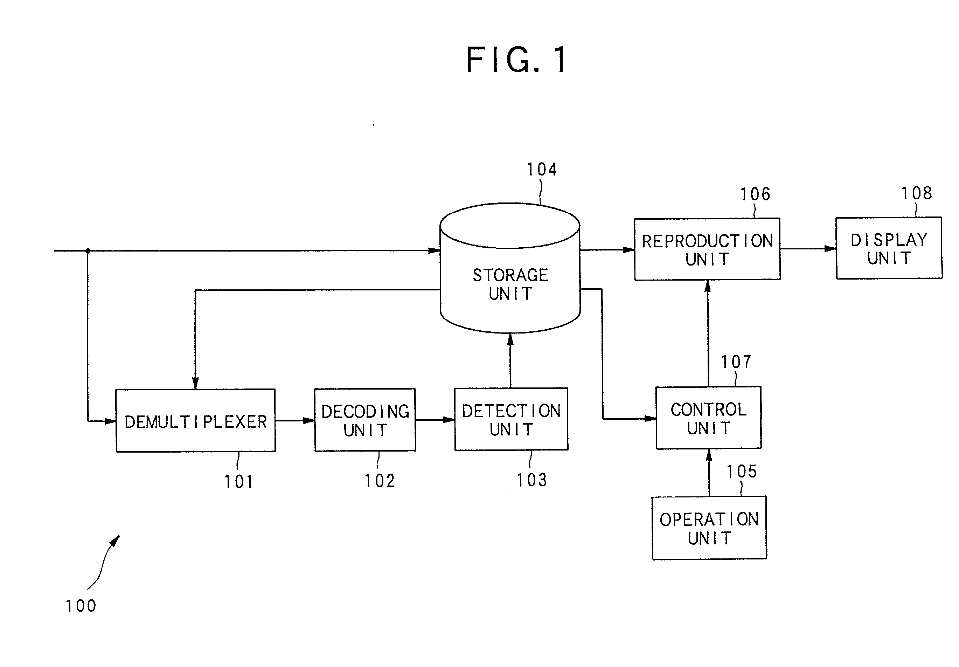

Referring first to FIGS. 1 to 4, the general structure and operation of the summary reproducing apparatus according to the embodiment will be described.

A summary reproducing apparatus 100 of the embodiment shown in FIG. 1 takes in digital audio/video information transmitted from a communications line or received at a receive unit, not shown. Then the summary reproducing apparatus 100 decodes the inputted digital audio/video information, and separates audio information from the decoded audio/video information to decide or select partial video information (hereinafter called digest segments) to be extracted for summary reproduction.

The process to decide digest segments to be extracted is carried out as follows: Potential digest segments (hereinafter called digest segment candidates) are listed, and then digest segments to be extracted are narrowed down from the listed digest segment candidates to decide digest segments to be used for summary reproduction.

This process to decide the digest segments is carried out by obtaining time information such as the start and stop time of each digest segment and the importance of the digest segment. Then digest segments are extracted from the inputted digital audio/video information based on the decided time information and order of importance of the digest segments, and the extracted digest segments are continuously reproduced along the time axis (hereinafter called summary reproduction).

It should be noted that in the embodiment video information and audio information added to the video information are multiplexed into the digital audio/video information.

As shown in FIG. 1, the summary reproducing apparatus 100 of the embodiment includes a demultiplexer 101 for demultiplexing the audio information from the inputted digital audio/video information, and a decoder 102 for decoding the audio information as digital signals demultiplexed by the demultiplexer 101 to obtain information on sound waveforms (sample values (hereinafter called sound waveform information). The summary reproducing apparatus 100 also includes a detection unit 103 for detecting silent sections and noise sections from the sound waveform information, a storage unit 104 for storing information on the detected silent and noise sections in the audio/video information concerned, and an operation unit 105 for use in operating each unit and entering the length of time in which the audio/video information should be summarized. Further, the summary reproducing apparatus 100 includes a reproduction unit 106 for performing summary reproduction of the stored audio/video information, a control unit 107 for deciding digest segments to be extracted from the stored audio/video information to control the reproduction unit 106, and a display unit 108 for displaying the summarized and reproduced video signals while outputting associated audio signals.

The detection unit 103 constitutes a classification device according to the present invention, while the control unit 107 and the reproduction unit 106 constitute a decision device and a generation device according to the present invention.

The digital audio/video information sent from the communications line or received at the receive unit, not shown, or the digital audio/video information that has already been stored in the storage mart 104 are inputted into the demultiplexer 101. The demultiplexer 101 demultiplexes the audio information from the inputted digital audio/video information, and outputs the demultiplexed audio information to the decoding unit 102.

The digital audio information outputted from the demultiplexer 101 is inputted into the decoding unit 102. The decoding unit 102 decodes the inputted digital audio information, obtains sound waveform information from the audio information, and outputs the obtained sound waveform information to the detection unit 103.

The sound waveform information is inputted from the decoding unit 102 into the detection unit 103. The detection unit 103 detects silent sections and noise sections from the inputted sound waveform information.

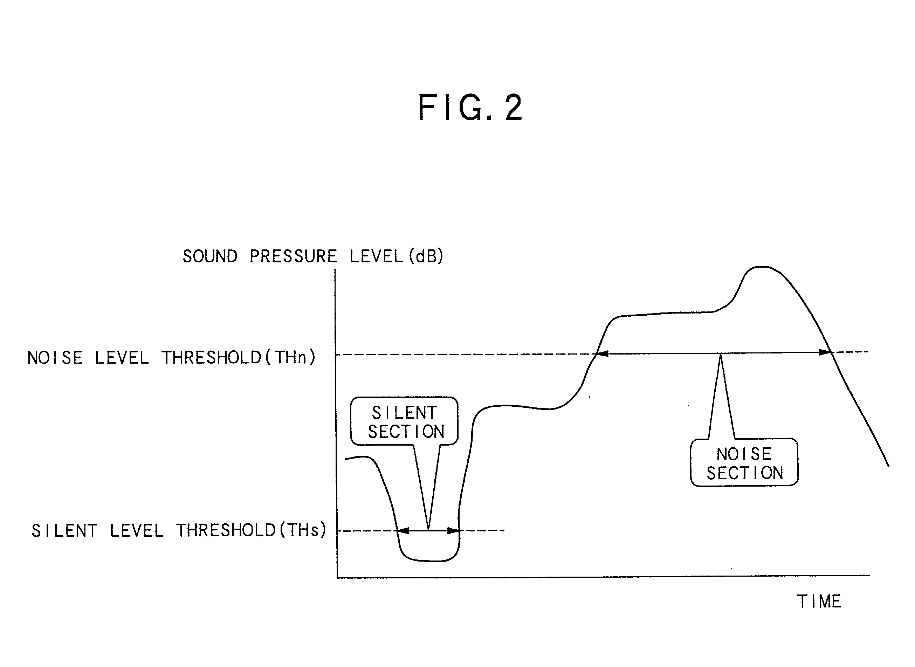

In the embodiment, as shown in FIG. 2, the detection unit 103 detects the time-base start position (hereinafter, simply called the start position) and the time-base end position (hereinafter, simply called the end position) of each of the silent and noise sections in the video information on the basis of a preset silent-level threshold (hereinafter called the silent level threshold ($TH_s$)) and a preset noise level threshold (hereinafter called the noise level threshold ($TH_n$)). Then the detection unit 103 outputs to the storage unit 104 time information on the start and end positions detected for each of the silent and noise sections. Hereinafter, the length of time for each of the silent and noise sections is called the section length.

Specifically, the detection unit 103 calculates an average sound pressure level (power) per unit time on the basis of the inputted sound waveform information. Suppose that the audio information obtained from the calculated value is equal to or less than the silent level threshold ($TH_s$) and equal to or more than the noise level threshold ($TH_n$). Suppose further that a section equal to or more than a preset length of time (hereinafter, called the minimum silent-section length ($DRS_{Min}$) or the minimum noise-section length ($DRS_{Min}$)) is detected. In this case, the section is detected as a silent section or a noise section.

Since a normal voice of an announcer in a news program is equal to -50dB or more, the silent level threshold ($TH_s$) is set to -50dB and the minimum silent section length ($DRS_{Min}$) is set to 0.2 sec. in the embodiment. On the other hand, since the voice level of background noise in a sport program when spectators have gotten into full swing becomes about -35dB, the noise level threshold ($TH_n$) is set to -35dB and the minimum noise section length ($DRN_{Min}$) is set to 1.0 sec. in the embodiment.

The storage unit 104 stores the digital audio/video information obtained and the time information for each of the silent and noise sections detected by the detection unit 103. The storage unit 104 also outputs the audio/video information to the reproduction unit 106 and the time information for each section to the control unit 107 in accordance with instructions from the control unit 107.

The operation unit 105 allows a user to instruct storage control of the audio/video information, instruct reproduction of the stored audio/video information, and enter a summary reproducing time at the time of summary reproduction. The operation unit 105 outputs these instructions to the control unit 107 so that the control unit 107 will control each unit accordingly.

The digital audio/video information outputted from the storage unit 104 is inputted into the reproduction unit 106. The reproduction unit 106 separates and decodes the inputted and multiplexed audio/video information into the video information and the audio information, and performs summary reproduction in accordance with the instructions from the control unit 107.

The reproduction unit 106 also outputs reproduced audio signals and video signals to the display unit 108.

Although in the embodiment the reproduction unit 106 separates and decodes the digital audio/video information into the video information and the audio information, the separation between the video information and the audio information may be achieved when they are stored into the storage unit 104.

The control unit 107 controls the storage into the storage unit 104 in accordance with instructions inputted from the operation unit 105 to decide digest segments to be extracted at the time of summary reproduction on the basis of the time information on the silent and noise sections accumulated in the storage unit 104. Then the control unit 107 performs control of the reproduction operation of the reproduction unit 106 on the basis of information on the decided segments (hereinafter called the segment information).

The process to decide the digest segments to be extracted (hereinafter called the digest segment decision process) will be described later.

The audio signals and the video signals are inputted from the reproduction unit 106 to the display unit 108. The display unit 108 displays the inputted video signals on a monitor screen or the like while amplifying the audio signals by means of a speaker or the like.

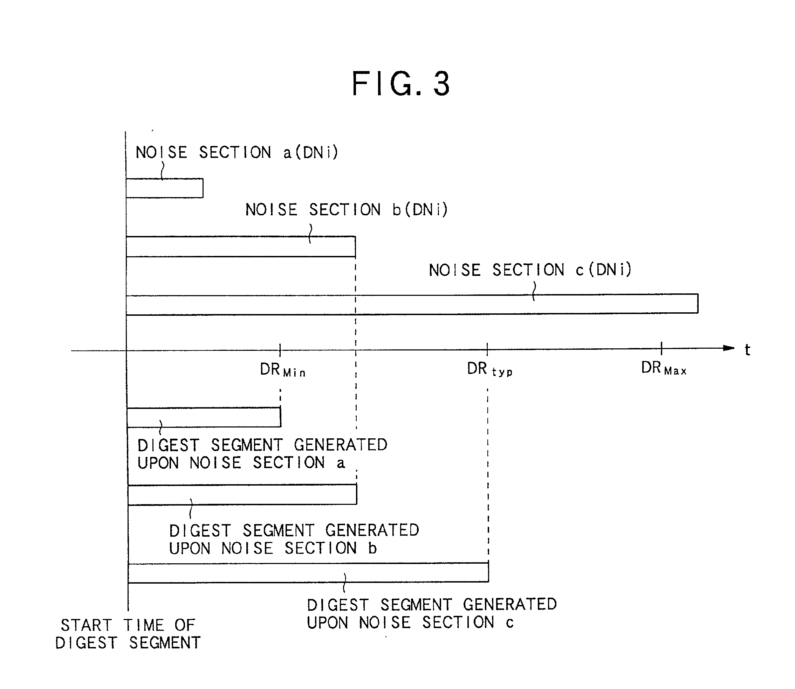

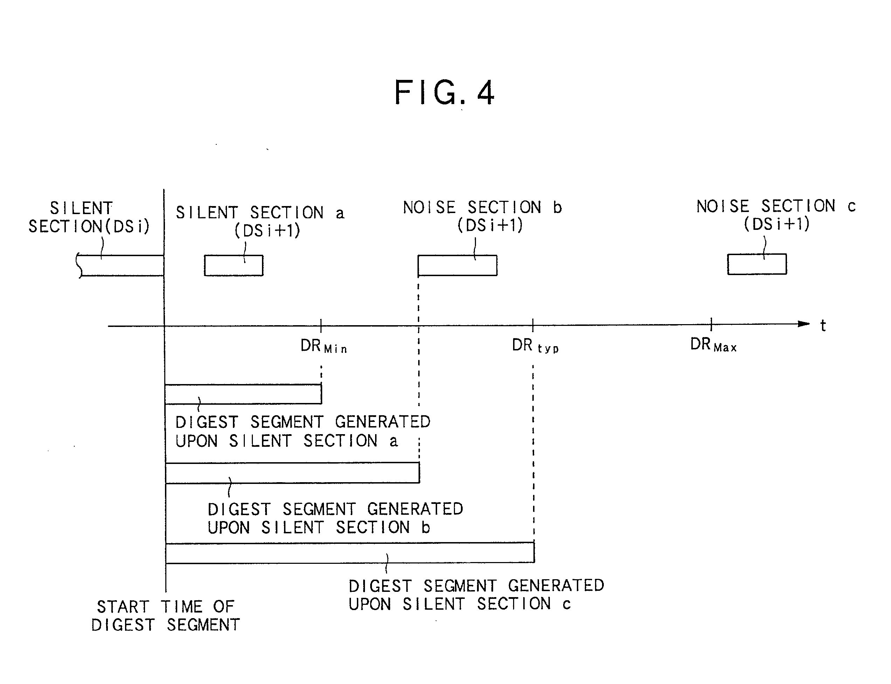

Referring next to FIGS. 3 and 4, the digest segment decision process performed in the control unit 107 will be next described.

In general, the audio information added to the audio/video information plays an important role in summarizing the audio/video information in sorter time than the time length of the audio/video information recorded or provided over a communications line or the like.

For example, in a television broadcasting program, a noise section indicates an exciting part of the program, while a silent section indicates a part that changes scene or switches program contents.

Specifically, if the program is a sport-watching program, since responses from spectators show in background noise such as shouts and cheers, an exciting scene will be much higher in sound level than the other scenes, and the part including the exciting scene can be regarded as a feature part of the video information.

On the other hand, if the program is a news program, since a silent section or so-called "interval (pause)" is taken at the time of switching news contents and the part that follows the "pause" shows the next contents, the part will be a feature part of the video information. Especially, the part that follows the silent section shows the beginning of the next contents, and often gives a short summary or outline of the contents concerned.

As mentioned above, the part that follows the silent section becomes important in conjunction with the silent section concerned, while the noise section itself becomes important in conjunction with the noise section. Since the position of the silent position and the noise section relative to the feature part of the audio/video information are different from each other on the time axis, the process to decide digest segments becomes different between the silent section and the noise section.

Further, as mentioned above, since the part that follows the silent section shows the beginning of the next contents, especially a short summary or outline of the next contents, more importance is given to the digest segment decided based on the silent section than that to the digest segment decided based on the noise section.

Thus, the silent section and the noise section in the audio/video information can be characterized on an individual basis. In the embodiment, the digest segment decision process is carried out on the basis of either the silent section or the noise section in a manner described below.

In the digest segment decision process of the embodiment, the start time ($STSS_i$), stop time ($SESS_i$), and importance ($IPSS_i$) of each digest segment are decided on the basis of whether the digest segment is in a silent section or noise section. In the following description, "i" indicates that the section is the i-th silent or noise section, and "j" indicates the j-th digest segment.

In the digest segment decision process of the embodiment, the start time and importance of each digest segment are decided on the basis of whether the digest segment is in a silent or noise section to list digest segment candidates. The digest segment candidates are then narrowed down to decide the minimum digest-segment time length, the typical digest-segment time length, and the maximum digest-segment time length so as to decide the stop time of each of the narrowed-down digest segments.

Further, in the digest segment decision process of the embodiment, the section length information ($DRSS_j$) on both the silent section and the noise section is held for use in selecting a digest segment from the digest segment candidates. In the embodiment, after the digest segments candidates are decided and narrowed down, the stop time of each narrowed-down digest segment is decided using the section length information ($DRSS_j$). In deciding the stop time to be described later, it is necessary to determine whether the digest segment is decided on the basis of the silent section or the noise section. The section length information (DRSSj) is used for this determination.

Specifically, in the embodiment, the section length of the target noise section is set for the digest segment based on the noise section concerned. On the other hand, $DRSS_j = 0$ is set for the digest segment based on the silent section.

In the digest segment decision process, when the stop time is decided in a manner described later, it can be determined that the digest segment is set based on the silent section if $DRSS_j = 0$, or the noise section if $DRSS_j \neq 0$.

[Setting of Digest Segment in Noise Section]

Since the noise section shows an exciting part of the program, the noise section itself becomes important. In the embodiment, as shown in FIG. 3, the start position of the noise section detected by the detection unit 103 is set as the start position of the digest segment.

In a sport-watching program, if shouts and cheers from spectators are collected and the collected sound is contained as background noise in the audio information added to the audio/video information concerned, it will be more effective in summary reproduction that the reproduction starts from a part a bit previous to the exciting scene. In general, an exciting part such as a good play and a goal or scoring scene in a sport game has some time delay until the spectators cheer over the exciting scene, that is, until the noise section appears. For this reason, the start time of the digest segment based on the noise section in the audio/video information such as on the sport-watching program may be moved forward $\Delta t$ from the actual start time of the noise section.

On the other hand, the stop time of the digest segment in the noise section is decided on the basis of the end position of the noise section.

In view of the contents of the digest segment to be extracted, the end position of the noise section basically needs to be set at the stop time of the digest segment. However, if the time length of the digest segment to be extracted is too short, the scene concerned may be made difficult to understand. On the other hand, unnecessarily long time length could contain a lot of needless information, and an increase in information amount makes it impossible to summarize the video information unerringly.

To avoid the above-mentioned problems, the minimum digest-segment time length ($DR_{Min}$), the typical digest-segment time length ($DR_{Typ}$), and the maximum digest-segment time length ($DR_{Max}$) are set in a manner described later for use in setting the stop time of the digest segment.

For example, as shown in FIG. 3, when the noise section ($DN_i$ (e.g., the noise section a in FiG. 3)) does not reach the minimum digest-segment time length ($DR_{Min}$), the time length of the digest segment is the minimum digest-segment time length ($DR_{Min}$). The minimum digest-segment time length ($DR_{Min}$) is added to the start time of the digest segment, and the resultant time is set for the stop time of the digest segment.

When the noise section ($DN_i$ (e.g., the noise section b in FIG. 3)) is equal to or more than the minimum digest-segment time length ($DR_{Min}$), and equal to or less than the maximum digest-segment time length ($DR_{Max}$), the noise section length is the time length of the digest segment, and the stop time of the digest segment is set at the end position of the noise section.

Further, when the noise section ($DN_i$ (e.g., the noise section c in FIG. 3)) exceeds the maximum digest-segment time length ($DR_{Max}$), the typical digest-segment time length ($DR_{Typ}$) is added to the start time of the digest segment, and the resultant time is set for the stop time of the digest segment.

In other words, the stop time of the j-th digest segment in the i-th noise section is determined from the segment time length ($DRDN_i = DRSS_j$) as follows:

$$\text{If } 0 < DRSS_i < DR_{Min},$$

$$SESS_j = STSS + DR_{Min}. \quad \text{(Eq.1)}$$

$$\text{If } DR_{Min} \le DRSS_i \le DR_{Max},$$

$$SESS_j = STSS + DRSS_i. \quad \text{(Eq.2)}$$

$$\text{If } DR_{Max} < DRSS_i,$$

$$SESSj = STSS + DR_{Typ}. \quad \text{(Eq.3)}$$

It should be noted that when the start time of the digest segment was moved forward $\Delta t$ from the start time of the noise section, $\Delta t$ needs to be subtracted from each of the minimum digest-segment time length ($DR_{Min}$), the typical digest-segment time length ($DR_{Typ}$), and the maximum digest-segment time length ($DR_{Max}$) so that the time length of the digest segment will be consistent with those of the other digest segments.

In the embodiment, the stop time of each digest segment is set for the digest segments that were narrowed down from the digest segment candidates in the process to narrow down digest segment candidates to be described later. In other words, the start time of each digest segment is set on the basis of the noise section to list digest segment candidates, then, the process to narrow down the digest segment candidates is performed in a manner described later. After that, the minimum digest-segment time length ($DR_{Min}$), the typical digest-segment time length ($DR_{Typ}$), and the maximum digest-segment time length ($DR_{Max}$) are set to set the stop time of the digest segment concerned.

On the other hand, the importance (IPSSj) of the digest segment in the noise section is set using the section length ($DRDN_i$) of the noise section. The longer the section length of the noise section, the more the importance can be set.

[Setting of Digest Segment in Silent Section]

As mentioned above, since the silent section shows a scene change part or a part that switches contents, the part that follows the end of the silent section becomes important. In the embodiment, as shown in Fig. 4, the end position of a silent section having a section length (hereinafter called the additional minimum silent-section length ($DRSA_{Min}$)) equal or more preset for the silent section detected by the detection unit 103, for instance, 1.0 sec., is set for the start time (STSS) of the digest segment.

Of course, the silent section could be of little or no importance. To detect a part in which there is an obvious "pause" that ensures the occurrence of a change in contents, the additional minimum silent-section length ($DRSA_{Min}$) is laid down in deciding a digest segment so that the end position of a silent section having a section length equal to or more than the additional minimum silent-section length ($DRSA_{Min}$) will be set for the start position of the digest segment.

On the other hand, the stop time of the digest segment in the silent section is decided on the basis of the start position of the silent section that follows the silent section used for setting the start time of the digest segment.

In this case, the section length of the silent section that follows the silent section used for setting the start time of the digest segment does not need to be equal to or more than the additional minimum silent-section length ($DRSA_{Min}$). Therefore, all the silent sections detected by the detection unit 103 are searched.

Like in the noise section, the stop time of the digest segment is set in a manner described later using the minimum digest-segment time length ($DR_{Min}$), the typical digest-segment time length ($DR_{Typ}$), and the maximum digest-segment time length ($DR_{Max}$).

For example, as shown in FIG. 4, when the start position of the silent section ($DS_{i+1}$ (e.g., the silent section a in FIG. 4)), which is detected immediately after the silent section set as the start time of the digest segment, does not reach the minimum digest-segment time length ($DR_{Min}$), the time length of the digest segment is the minimum digest-segment time length ($DR_{Min}$). The minimum digest-segment time length ($DR_{Min}$) is added to the start time of the digest segment, and the resultant time is set for the stop time of the digest segment.

When the start position of the silent section ($DS_{i+1}$ (e.g., the silent section b in FIG. 4)), which is detected immediately after the silent section set as the start time of the digest segment, exceeds the minimum digest-segment time length ($DR_{Min}$) but does not reach the maximum digest-segment time length ($DR_{Max}$), the start position of the detected silent section ($DS_{i+1}$) is set for the stop time of the digest segment.

Further, when the start position of the silent section ($DS_{i+1}$ (e.g., the silent section c in FIG. 4)), which is detected immediately after the silent section set as the start time of the digest segment, exceeds the maximum digest-segment time length ($DR_{Max}$), the time length of the digest segment is the typical digest-segment time length ($DR_{Typ}$). The typical digest-segment time length ($DR_{Typ}$) is added to the start time of the digest segment, and the resultant time is set for the stop time of the digest segment.

In the embodiment, when the stop time of the digest segment is set using the minimum digest-segment time length ($DR_{Min}$), the typical digest-segment time length ($DR_{Typ}$), and the maximum digest-segment time length ($DR_{Max}$), the next silent section is detected in the following sequence.

The silent section ($DS_{i+1}$) that follows the silent section used as reference to the start time of the digest segment is detected in the following sequence of operations. First of all, it is detected whether the start position of the silent section ($DS_{i+1}$) detected immediately after the silent section ($DS_i$) is equal to or more than the minimum digest-segment time length ($DR_{Min}$) and equal to or less than the maximum digest-segment time length ($DR_{Max}$). If the start position does not exist within the range, it is then detected whether the start position of the silent section ($DS_{i+1}$) detected immediately after the silent section ($DS_i$) exists within the minimum digest-segment time length ($DR_{Min}$). If the start position does not exist within the range, the silent section ($DS_{i+1}$) detected immediately after the silent section ($DS_i$) is determined to be in a range of the maximum digest-segment time length ($DR_{Max}$) or more.

In other words, the stop time of the j-th digest segment in the i-th silent section is determined as follows: If the start position (ST) of the silent section ($DS_{i+1}$) was found in the section [$DR_{Min}$, $DR_{Max}$],

$$SESS_j = ST. \qquad \text{(Eq.4)}$$

If the start position (ST) of the silent section ($DS_{i+1}$) was found in the section [0, $DR_{Min}$], rather than the section [$DR_{Min}$, $DR_{Max}$],

$$SESS_j = STSS_i + DR_{Min}. \qquad \text{(Eq.5)}$$

If the start position (ST) of the silent section ($DS_{i+1}$) was not found in the section [0, $DR_{Max}$],

$$SESS_j = STSS_i + DR_{Typ}. \qquad \text{(Eq.6)}$$

In the sequence of detection of the silent section ($DS_{i+1}$), even when the next silent section ($DS_{i+1}$) exists in the minimum digest-segment time length ($DR_{Min}$), if the start position of another silent section (e.g., $DS_{i+n}$, where $n \geq 2$) is equal to or more than the minimum digest-segment time length ($DR_{Min}$), and equal to or less than the maximum digest-segment time length ($DR_{Max}$), the next silent section ($DS_{i+1}$) that exists in the minimum digest-segment time length ($DR_{Min}$) is not handled as the silent section that follows the silent section ($DS_i$) used as reference to the start time of the digest segment, and the silent section ($DS_{i+n}$, where $n \geq 2$) is regarded as the next silent section ($DS_{i+1}$). Thus the stop time of the digest segment is decided on the basis of the silent section ($DS_{i+1}$) concerned.

Like in the setting of the stop time of the digest segment in the nose section, the stop time of each digest segment in the silent section is set for the digest segments that were narrowed down from the digest segment candidates in the process to narrow down digest segment candidates to be described later.

On the other hand, the importance ($IPSS_j$) of the digest segment in the silent section is set in the same manner as in the noise section on the basis of the section length ($DRDN_i$) of the silent section. However, since the silent section is of more importance than the noise section, it is determined, for example, by the following equation 7:

$$IPSSj = f(DRDS_i) \qquad \text{(Eq.7)}$$

In the equation 7, f(•) is a weighing function, and in the embodiment, the following weighing function is used:

$$f(x) = ax + b \qquad \text{(Eq.8)}$$

In the equation 8, a and b are constants, and the following specific example can be considered:

$$f(x) = x + 100 \qquad \text{(Eq.9)}$$

[Process to Narrow Down Digest Segment Candidates]

The summary reproduction process to be described later may be performed on all the digest segments decided as mentioned above on the basis of the silent and noise sections. However, the digest segments to be set are narrowed down for purposes of reduction in amounts to be processed and prevention of reproduction of unnecessary digest segments, that is, prevention of reproduction of inappropriate digest segments, which means that even the digest segment of little importance could be of increasing importance in the merging process to be described later.

In the embodiment, the process to narrow down the digest segments is carried out from the digest segment candidates listed by the following equation 10.

Assuming that the time length of all the digest segments is the minimum limit time ($DR_{LMin}$), the equation 10 is to compare a multiple (e.g., $K_1 = 2$) of the number of digest segments to be narrowed down with the number of digest segment candidates so that the smaller number will be set as the number of digest segments.

For example, if the number of listed digest segment candidates is ($NP_{old}$) and the digest time is S, the number of digest segment candidates ($NP_{new}$) to be newly set is obtained as:

$$NP_{new} = Min(Int(k_1 \text{ x } (S/DR_{LMin})), NP_{old}) \qquad \text{(Eq.10)}$$

In the equation 10, $k_1$ is a constant, Min(a, b) means that smaller one of a and b is selected, and Int(•) means that the fractional portion of the number is dropped. Further, $NP_{new}$ represents the number of digest segment candidates after narrowed down, and the $DR_{LMin}$ represents the minimum limit time.

The minimum limit time ($DR_{LMin}$) is the minimum time necessary for a person to understand the contents of a digest segment. For example, in the embodiment, the minimum limit time ($DR_{LMin}$) is four seconds.

When the number of digest segment candidates thus calculated is larger than the multiple of the number of digest segments to be narrowed down, that is, when $NP_{new} < NP_{old}$, a number of digest segment candidates corresponding to the number $NP_{new}$ are selected in descending order of importance, and the others are deleted from the list of the digest segment candidates.

In the embodiment, the digest segment candidates are thus narrowed down so that the stop time of each digest segment is set for the narrowed-down digest segment candidates according to the above-mentioned setting method.

[Setting of Minimum/Typical/Maximum Digest-Segment Time Length]

As discussed above, the digest segment to be extracted has a time length as long as possible so that the digest segment will be made understandable. On the other hand, unnecessarily long time length could contain a lot of needless information, and an increase in information amount makes it impossible to summarize the video information unerringly. Therefore, in the embodiment, the minimum digest-segment time length ($DR_{Min}$), the typical digest-segment time length ($DR_{Typ}$), and the maximum digest-segment time length ($DR_{Max}$) are set in a manner described below.

For example, in the embodiment, the minimum digest-segment time length ($DR_{Min}$), the typical digest-segment time length ($DR_{Typ}$), and the maximum digest-segment time length ($DR_{Max}$) are determined by the following equations so that the contents of each digest segment to be extracted will be grasped unerringly.

Considering that the digest segment is made easily visible to the user, the minimum digest-segment time length ($DR_{Min}$) is set as shown in equation 11 so that the digest segment will have a relatively long time length. The typical digest-segment time length ($DR_{Typ}$) and the maximum digest-segment time length ($DR_{Max}$) are calculated by multiplying the minimum digest-segment time length ($DR_{Min}$) calculated from the equation 11 by a constant as shown in equations 12 and 13.

$$DR_{Min} = Max(DR_{LMin}, (K2 \times (S/NP_{new}))) \qquad (Eq.11)$$

$$DR_{Typ} = DR_{Min} \times K_{T1} \qquad (Eq.12)$$

$$DR_{Max} = DR_{Min} \times K_{T2} \qquad (Eq.13)$$

Here, $K_{T1}$ and $K_{T2}$ are proportional constants, and Max($\underline{a}$, b) means that the larger value out of $\underline{a}$ and b is selected. Further, $K_2$ ($\geq 1$) is a coefficient for use in deciding the minimum time of each digest segment. The larger the value of $K_2$, the longer the minimum time and the smaller the number of digest segments. For example, $K_2 = 1$, $K_{T1} = 2$, and $K_{T2} = 3$ in the embodiment.

[Merging of Digest Segments]

In the embodiment, when two or more digest segments coincide with each other, the digest segments are merged into a digest segment. In this case, the importance of the digest segment generated by merging two or more digest segments takes the highest value of importance ($IPSS_j$) from among values for all the digest segments (see the following equation 14).

$$IPSS_j = Max(IPSS_j, IPSS_{j\pm n}) \qquad (Eq.14)$$

Further, if $STSS_j < STSS_{j+n}$ and $SESS_j \geq SESS_{J+n}$ for two digest segments $SS_j$ and $SS_{j+n}$, the following equation is obtained:

$$SESS_j = SESS_{j+n} \qquad (Eq.15)$$

Thus, even when a digest segment is of little importance, if the digest segment coincides with another digest segment of much importance, the digest segment of little importance can be complemented by that of much importance.

[Decision of Digest Segment]

In the embodiment, the digest segment candidates are selected in descending order of importance to achieve the specified digest time in the final process.

The selection of digest segment candidates is continued until the total time of the selected digest segment candidates exceeds the specified digest time.

When the digest segments are decided in descending order of importance, since the time length varies from segment to segment, the total time of the selected digest segments may exceed the specified digest time. If exceeding the specified digest time becomes a problem, necessary measures will be taken against the overtime, such as to share the overtime among the decided digest segments by eliminating the shared time from the stop time of each digest segment.

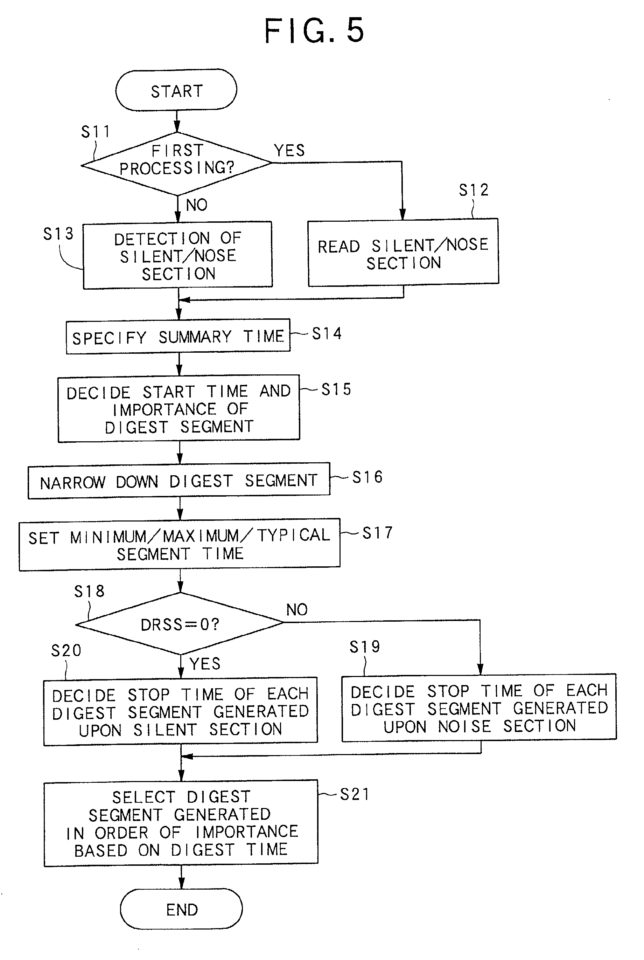

Referring next to FIGS. 5 to 7, the digest segment decision process in the summary reproducing operation of the control unit 107 will be described.

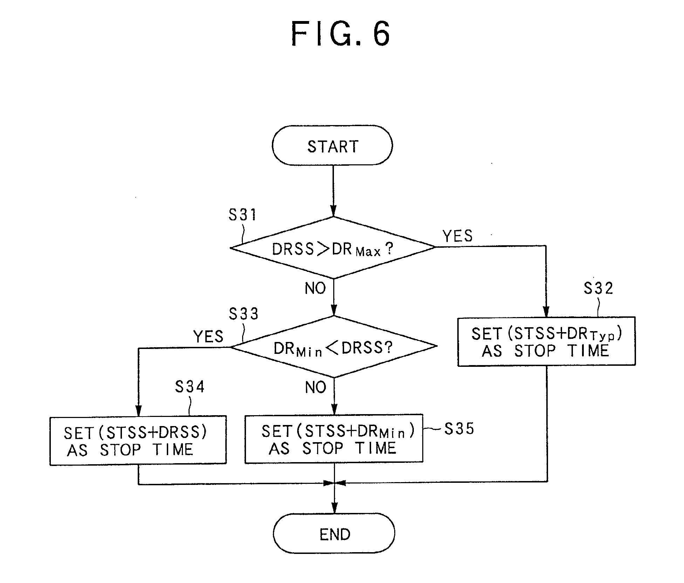

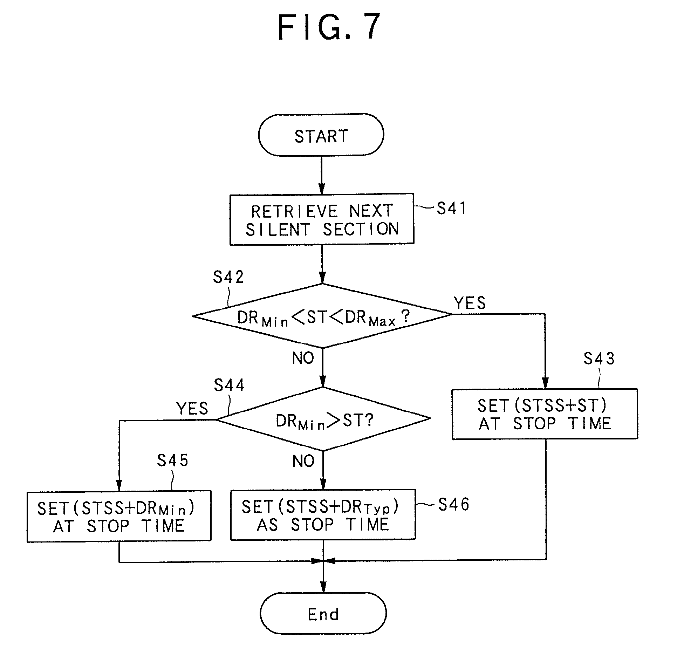

FIG. 5 is a flowchart showing a digest-segment decision operation for summary reproduction according to the embodiment. FIGS. 6 and 7 are flowcharts showing setting operations on the stop time of digest segments decided on the basis of the noise section and the silent section in the digest-segment decision process, respectively.

Assuming that the audio/video information required for summary reproduction is already stored in the storage unit 104, the operation is carried out when the user instructs the summary reproduction.

As shown in FIG. 5, when the user enters an instruction for summary reproduction through the operation unit 105, the control unit 107 determines whether the silent- and noise-section detection process is performed on the specified audio/video information for the first time (step S11). If it is determined that silent and noise sections have been previously detected for the audio/video information concerned, the data are read out of the storage unit 104 (step S12).

On the other hand, if the silent- and noise-section detection process has not been performed on the specified audio/video information yet, the control unit 107 controls the detection unit 103 to detect silent and noise sections from the specified audio/video information (classification step (step S13)).

Then the control unit 107 fetches a digest time specified by the user or a preset digest time (step S14), and starts listing digest segment candidates based on the silent and noise sections read out of the storage unit 104 (decision step (step S15)).

Specifically, the start and end positions of the silent section having the additional minimum silent-section length ($DRSA_{min}$) and the noise section are detected, and the start time and importance of each digest segment are set.

The control unit 107 then performs the process to narrow down the digest segments from the digest-segment candidate list created in step S15 (decision step (step S16)).

Specifically, the number of digest segments to be narrowed down from the listed digest segment candidates is calculated on the basis of the inputted digest time and the minimum limit time ($DR_{LMin}$), and a calculated number of digest segments are selected from the listed digest segment candidates in descending order of importance to narrow down the digest segment candidates.

Then, the control unit 107 calculates the minimum digest-segment time length ($DR_{Min}$) on the basis of the number of digest segments narrowed down in step S16 and the minimum limit time ($DR_{LMin}$), and sets the typical digest-segment time length ($DR_{Typ}$) and the maximum digest-segment time length ($DR_{Max}$) on the basis of the minimum digest-segment time length ($DR_{Min}$) (step S17).

Then, the control unit 107 determines the type of sound section, set in step S15, of each of the digest segment candidates narrowed down in step S16, that is, whether each digest segment is set on the basis of the noise section or the silent section (step S18).

Specifically, the determination is made by the value of the section length of the silent section or the noise section (i.e., whether DRSSj = 0 or not) on which each digest segment candidate is based.

Then, the control unit 107 sets the stop time of each digest segment candidate according to the type of the sound section (decision steps (steps S19 and S20)). If the digest segment candidate is based on a noise section, the stop time of the digest segment candidate will be set according to the end position of the noise section (step S19). On the other hand, if the digest segment candidate is based on a silent section, the stop time of the digest segment candidate is set according to the start position of another silent section, which was detected immediately after the silent section used as reference to the start time (step S20).

The processing operation on the stop time of each of the digest segment candidates to be set on the basis of whether the digest segment candidate is in the silent section or the noise section will be described later.

Finally, the control unit 107 merges two or more digest segment candidates that coincide with each other in the above-mentioned manner, and selects digest segment candidates to be extracted in descending order of importance so that the total time of the selected digest segment candidates becomes the digest time inputted in step S14, thus deciding the digest segments (decision step (step S21)).

After completion of the selection of the digest segment candidates and decision of the digest segments for summary reproduction, the control unit 107 controls the reproduction unit 106 to start the summary reproduction based on the decided digest segments.

Referring next to FIG. 6, description will be made about the processing step S19 of setting the stop time of each of the digest segment candidates generated on the basis of the noise section.

It is first determined whether the section length ($DRSS_i$) of the noise section on which the digest segment candidate is based is within the maximum digest-segment time length ($DR_{Max}$) (step S31). If the section length ($DRSS_i$) of the noise section exceeds the maximum digest-segment time length ($DR_{Max}$), the typical digest-segment time length ($DR_{Typ}$) is added to the start position (STSS) of the noise section concerned, and the resultant value is set as the stop time (step S32).

On the other hand, if the section length of the noise section is shorter than the maximum digest-segment time length ($DR_{Max}$), it is then determined whether the section length of the noise section is longer than the minimum digest-segment time length ($DR_{Min}$) (step S33). If the section length ($DRSS_i$) of the noise section concerned is longer than the minimum digest-segment time length ($DR_{Min}$), the minimum digest-segment time length ($DR_{Min}$) is added to the start position (STSS) of the noise section concerned, and the resultant value is set as the stop time (step S35).

Referring next to FIG. 7, description will be made about the processing step S20 of setting the stop time of each of the digest segment candidates generated on the basis of the silent section.

First, the next silent section that follows the silent section concerned is retrieved (step S41).

As discussed above, even when the next silent section exists within the minimum digest-segment time length ($DR_{Min}$), priority is given to any other silent section that is equal to or more than the minimum digest-segment time length ($DR_{Min}$) and equal to or less than the maximum digest-segment time length ($DR_{Max}$). Therefore, when the next silent section exists within the minimum digest-segment time length ($DR_{Min}$), the first silent section that exists beyond the minimum digest-segment time length ($DR_{Min}$) is also retrieved.

It is next determined whether the time length (ST) to the start position of the silent section ($DS_{i+1}$), which was detected immediately after the silent section ($DS_i$) set as the start time of the digest segment, is equal to or more than the minimum digest-segment time length ($DR_{Min}$) and equal to or less than the maximum digest-segment time length ($DR_{Max}$) (step S42). If the time length (ST) to the start position of the silent section of the silent section ($DS_{i+1}$) is equal to or more than the minimum digest-segment time length ($DR_{Min}$) and equal to or less than the maximum digest-segment time length ($DR_{Max}$), the time length ST of the start position is added to the start time ($STSS_i$) of the digest segment, and the resultant value is set as the stop time (step S43).

If the time length (ST) to the start position of the silent section ($DS_{i+1}$) is not equal to or more than the minimum digest-segment time length ($DR_{Min}$), and not equal to or less than the maximum digest-segment time length ($DR_{Max}$), it is then determined whether the time length (ST) to the start position of the silent section ($DS_{i+1}$) detected immediately after the silent section ($DS_i$) is shorter than the minimum digest-segment time length ($DR_{Min}$) (step S44). If the time length (ST) to the start position is shorter than the minimum digest-segment time length ($DR_{Min}$), the minimum digest-segment time length ($DR_{Min}$) is added to the start time ($STSS_i$) of the digest segment, and the resultant value is set as the stop time (step S45). If the time length (ST) to the start position is longer than the minimum digest-segment time length ($DR_{Min}$), the typical digest-segment time length ($DR_{Typ}$) is added to the start time ($STSS_i$) of the digest segment, and the resultant value is set as the stop time (step S46).

As discussed above and according to the embodiment, digest segments to be extracted are decided on the basis of the silent and noise sections detected according to the sound levels of the audio/video information. Therefore, summary reproduction can be performed on exciting parts and parts that switch contents of the audio/video information. Further, since the importance of each digest segment can be decided on the basis of the section length of the silent or noise section used as reference to the decision of the digest segment, digest information that enables the user to grasp the contents unerringly in a short time can be obtained.

Further, the start time of the digest segment can be set at the end position of a silent section, while the stop time of the digest segment concerned can be set on the basis of the next silent section detected immediately after the start time of the digest segment. Therefore, the digest segment can be extracted at such proper timing that the user will not feel something is wrong at all, such as a part that shows a feature part of the audio/video information or a part that is a good place to leave off.

Furthermore, the start time of partial video information can be set at the start position of a noise section, while the stop time of the partial video information can be set according to the time length of the noise section. Therefore, the digest segment can be extracted in an exciting part of the audio/video information, that is, at such proper timing that the user will not feel something wrong at all.

In addition, the stop time of each digest segment is decided on the basis of the minimum digest-segment time length, the typical digest-segment time length, and the maximum digest-segment time length. Therefore, a time length enough for the user to understand the contents of the extracted digest segment can be secured while preventing the time length of the digest segment from becoming unnecessarily long.

Although in the embodiment the summary reproduction is performed on the basis of the video information composed of digital signals, the present invention is applicable to audio/video information provided by analog signals.

Further, in the embodiment, a noise level threshold ($TH_n$) is used to detect the noise section, but two or more noise level threshold ($TH_n$) may be used.

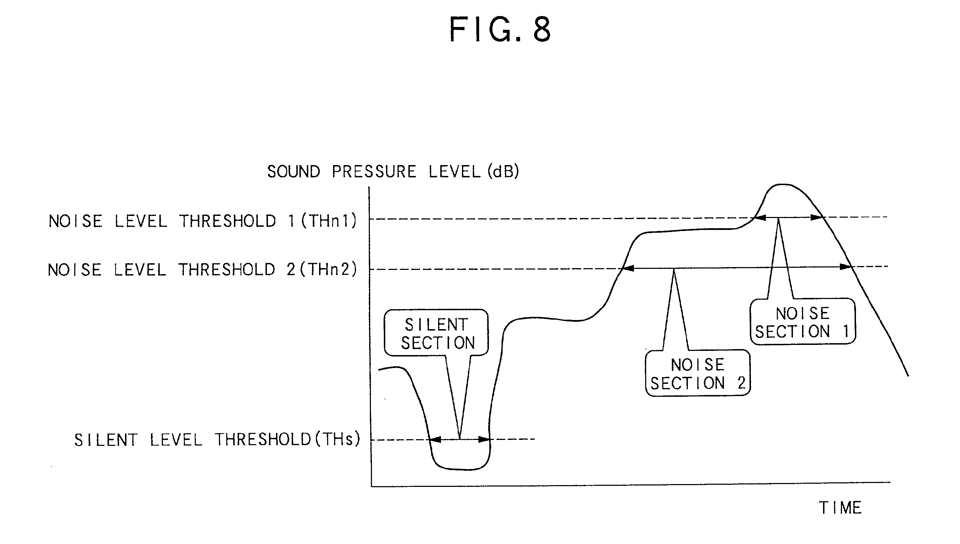

In the case, as shown in FIG. 8, if noise level thresholds ($TH_{n1}$) and ($TH_{n2}$) are used to detect noise sections 1 and 2 respectively, further appropriate summary reproduction can be performed compared to the case where a digest segment is created from a noise section.

In other words, a very exciting part of the audio/video information, the sound level of which exceeds the noise level threshold 1 ($TH_{n1}$), is detected as a noise section. Then the importance of the digest segment in the noise section is set more than that of another digest segment decided by the noise level threshold 2 ($TH_{n2}$), by means of a weighting function or the like as used for setting the importance of a digest segment decided on the basis of the silent section.

As a result, any important part in the audio/video information can be set as a digest segment unerringly, while the noise section obtained by the noise level threshold 2 ($TH_{n2}$) can also be set as a digest segment candidate. This feature allows the user to have a wide range of digest segments to choose from and perform appropriate summary reproduction.

Further, the above-mentioned merging of digest segments that coincide with one another could result in the merging of a very exciting digest segment with digest segments before and after the very exciting digest segment. This merging process makes a digest segment of extreme importance, so that the very exciting part can be replayed for a relatively long time at the time of digest viewing, thus performing appropriate summary reproduction.

Furthermore, a conventional CM (Commercials) cutting technique may be employed in the embodiment. The probability is generally high that CM parts of the audio/video information will be noise sections. Therefore, if the CM cutting technique is combined with the embodiment such that the CM parts are detected before noise and silent sections are detected from the audio/video information for summary reproduction, an appropriate noise level threshold or thresholds can be set, which makes it possible to perform more appropriate summary reproduction.

For the CM cutting technique, a method and device for summarizing video described in Japanese Laid-Open Patent Application No. Hei 9-219835 is used. This technique is to detect a part (clip) that shows an enormous change in contents in the video information and silent sections so that the CM part will be cut using the clip and the silent sections.

Furthermore, in the embodiment, digest segments in close proximity to one another on the time axis may be merged. For example, a sequence of moving pictures such as MPEG pictures may take time to seek required positions on the time axis at the time of summary reproduction, causing a problem of temporary replay stops during seek time between digest segments at the time of summary reproduction. This problem is offensive to the user who is viewing the digest replay. To avoid this problem, after the completion of the above-mentioned selection of the digest segments to be extracted, digest segments in close proximity to one another on the time axis are further merged into a digest segment to reduce the number of digest segments required at the time of summary reproduction, so that the number of seek times is reduced, thereby providing an easy-to-view digest replay.

Although in the embodiment the detection unit 103, the reproduction unit 106, and the control unit 107 operate in the summary reproduction process, a program for the summary reproduction process may be read out via a computer to perform the summary reproduction.

In this case, the control unit 107 is provided with the computer that loads and executes the program. The decoded audio/video information is inputted into the computer, and silent and noise sections are detected from the inputted audio/video information. Based on the silent and noise sections detected, digest segments of the audio/video information are decided so that the summary reproduction of the inputted audio/video information will be performed on the basis of the digest segments decided. The use of the program and the computer can display the same effects as the above-mentioned summary reproducing apparatus.

Further, although in the embodiment the summary reproducing apparatus 100 is constituted of the detection unit 103, the reproduction unit 106, the control unit 107, and so on as mentioned above, the control unit 107 may be provided with a computer and a storage medium such as a hard disk. In this configuration, a program that performs processing corresponding to the operation of each unit of the summary reproducing apparatus 100, such as the detection unit 103, the reproduction unit 106, and the control unit 107 is stored on the storage medium and loaded on the computer so that the operation of each unit of the summary reproducing apparatus 100, such as the detection unit 103, the reproduction unit 106, and the control unit 107, will be performed.

When the above-mentioned digest-segment decision process and the summary reproduction process are performed, the program is run on the computer to perform the above-mentioned operations of digest decision and summary reproduction. Further, in this case, the control unit 107 constitutes the detection device, the generation device, and the decision device according to the present invention.

## Claims

**1.** A video information summarizing apparatus (100) for extracting one or more pieces of partial video information as some parts of video information based on audio information from the video information to which the audio information is added so that digest information summarized in shorter time than the video information will be generated from the video information on the basis of the partial video information extracted, **characterized in that** the apparatus comprises:

a classification device (103, 107) which classifies the video information into plural sound sections on the basis of the sound levels in the audio information;
a decision device (107) which decides the partial video information to be extracted on the basis of at least either the time-base position or the time length of at least any one of the plural types of sound sections classified in the video information; and
a generation device (106, 107) which extracts the decided partial video information from the video information to generate the digest information.

**2.** The video information summarizing apparatus (100) according to claim 1, wherein
the decision device (107) decides at least either the start time or the stop time of the partial video information on the basis of at least either the time-base position or the time length of at least any one of the plural types of sound sections classified in the video information.

**3.** The video information summarizing apparatus (100) according to claim 1 or 2, wherein
the classification device (103, 107) classifies on the basis of the sound levels the video information into at least soundless, silent sections and noise sections that fall within a preset range of sound levels.

**4.** The video information summarizing apparatus (100) according to claim 3, wherein
the decision device (107) sets the start time of the partial video information at a time-base position that shows the end of a corresponding silent section having a preset time length.

**5.** The video information summarizing apparatus (100) according to claim 4, wherein
after setting the start time of the partial video information based on the silent section, the decision device (107) sets the stop time of the partial video information based on the time-base position of another silent section detected immediately after the silent section concerned.

**6.** The video information summarizing apparatus (100) according to claim 3, wherein
the decision device (107) sets the start time of the partial video information based on the time-base position that shows the start of a noise section having a preset time length.

**7.** The video information summarizing apparatus (100) according to claim 6, wherein
after deciding the start time of the partial video information based on the noise section, the decision device (107) sets the stop time of the partial video information based on the time length of the noise section concerned.

**8.** The video information summarizing apparatus (100) according to any one of claims 4 to 7, wherein
the decision device (107) sets, within a preset time range, the time length of the partial video information to be extracted.

**9.** The video information summarizing apparatus (100) according to any one of claims 1 to 8, wherein
the decision device (107) sets the importance of the partial video information based on at least either the type or the time length of the sound section used as reference to the decision of the partial video information to be extracted, and
the generation device (106, 107) makes a summary of the video information by extracting the partial video information on the basis of the set importance of the partial video information.

**10.** The video information summarizing apparatus (100) according to claim 9, wherein
the decision device (107) sets more importance to the partial video information based on the silent section than that of the partial video information based on the noise section.

**11.** The video information summarizing apparatus (100) according to claim 9 or 10, wherein
when the decided plural pieces of partial video information coincide with one another, the decision device (107) merges the coincident pieces of partial video information into a piece of partial video information, and sets the importance of the merged partial video information based on the importance of each piece of partial video information being merged at present.

**12.** A video information summarizing method for extracting, based on audio information, one or more pieces of partial video information as some parts of video information from the video information to which the audio information is added so that digest information summarized in shorter time than the video information will be generated from the video information on the basis of the partial video information extracted, said method comprising:

a classification process of classifying the video information into plural sound sections on the basis of the sound levels in the audio information;
a decision process of deciding the partial video information to be extracted on the basis of at least either the time-base position or the time length of at least any one of the plural types of sound sections classified in the video information; and
a generation process of extracting the decided partial video information from the video information and generate the digest information.

**13.** The video information summarizing method according to claim 12, wherein
the decision process decides at least either the start time or the stop time of the partial video information on the basis of at least either the time-base position or the time length of at least any one of the plural types of sound sections classified in the video information.

**14.** The video information summarizing method according to claim 12 or 13, wherein
the classification process classifies on the basis of the sound levels the video information into at least soundless, silent sections and noise sections that fall within a preset range of sound levels.

**15.** The video information summarizing method according to any one of claims 12 to 14,
the decision process sets the importance of the partial video information based on at least either the type or the time length of the sound section used as reference to the decision of the partial video information to be extracted, and
the generation process makes a summary of the video information by extracting the partial video information on the basis of the set importance of the partial video information.

**16.** A video information summarizing program embodied in a recording medium which can be read by a computer in a video information summarizing apparatus (100) for extracting, based on audio information, one or more pieces of partial video information as some parts of video information from the video information to which the audio information is added so that digest information summarized in shorter time than the video information will be generated from the video information on the basis of the partial video information extracted, the program causing the computer to function as:

a classification device (103, 107) which classifies the video information into plural sound sections on the basis of the sound levels in the audio information;
a decision device (107) which decides the partial video information to be extracted on the basis of at least either the time-base position or the time length of at least any one of the plural types of sound sections classified in the video information; and
a generation device (106, 107) which extracts the decided partial video information from the video information to generate the digest information.

**17.** The video information summarizing program according to claim 16, wherein
the decision device (107) decides at least either the start time or the stop time of the partial video information on the basis of at least either the time-base position or the time length of at least any one of the plural types of sound sections classified in the video information.

**18.** The video information summarizing program according to claim 16, wherein
the classification device (103, 107) classifies on the basis of the sound levels the video information into at least soundless, silent sections and noise sections that fall within a preset range of sound levels.

**19.** The video information summarizing program according to claim 16, wherein
the decision device (107) sets the importance of the partial video information based on at least either the type or the time length of the sound section used as reference to the decision of the partial video information to be extracted, and
the generation device (106, 107) makes a summary of the video information by extracting the partial video information on the basis of the set importance of the partial video information.

FIG. 1
DEMULTIPLEXER
101
DECODING UNIT
102
DETECTION UNIT
103
STORAGE UNIT
104
OPERATION UNIT
105
REPRODUCTION UNIT
106
CONTROL UNIT
107
DISPLAY UNIT
108
100

FIG. 2

SOUND PRESSURE LEVEL (dB)
NOISE LEVEL THRESHOLD (THn)
SILENT LEVEL THRESHOLD (THs)
SILENT SECTION
NOISE SECTION
TIME

FIG. 3
NOISE SECTION a(DNi)
NOISE SECTION b(DNi)
NOISE SECTION c(DNi)
t
DR Max
DR typ
DR Min
DIGEST SEGMENT GENERATED UPON NOISE SECTION a
DIGEST SEGMENT GENERATED UPON NOISE SECTION b
DIGEST SEGMENT GENERATED UPON NOISE SECTION c
START TIME OF DIGEST SEGMENT

FIG. 4
SILENT SECTION(DSi)
SILENT SECTION a (DSi+1)
NOISE SECTION b (DSi+1)
NOISE SECTION c (DSi+1)
t
DR Min
DR typ
DR Max
DIGEST SEGMENT GENERATED UPON SILENT SECTION a
DIGEST SEGMENT GENERATED UPON SILENT SECTION b
DIGEST SEGMENT GENERATED UPON SILENT SECTION c
START TIME OF DIGEST SEGMENT

FIG. 5

START
S11
FIRST PROCESSING?
YES
NO
S12
READ SILENT/NOSE SECTION
S13
DETECTION OF SILENT/NOSE SECTION
SPECIFY SUMMARY TIME
S14
DECIDE START TIME AND IMPORTANCE OF DIGEST SEGMENT
S15
NARROW DOWN DIGEST SEGMENT
S16
SET MINIMUM/MAXIMUM/TYPICAL SEGMENT TIME
S17
S18
DRSS=0?
NO
YES
S20
DECIDE STOP TIME OF EACH DIGEST SEGMENT GENERATED UPON SILENT SECTION
S19
DECIDE STOP TIME OF EACH DIGEST SEGMENT GENERATED UPON NOISE SECTION
SELECT DIGEST SEGMENT GENERATED IN ORDER OF IMPORTANCE BASED ON DIGEST TIME
S21
END

FIG. 6

START
S31
DRSS>DR Max ?
YES
NO
S32
SET (STSS+DRTyp)
AS STOP TIME
S33
YES
DRMin<DRSS?
NO
S34
SET (STSS+DRSS)
AS STOP TIME
SET (STSS+DRMin)
AS STOP TIME
S35
END

FIG. 7

START
RETRIEVE NEXT SILENT SECTION
S41
S42
DRMin<ST<DRMax ?
YES
NO
S43
SET (STSS+ST) AT STOP TIME
S44
YES
DRMin>ST?
NO
S45
SET (STSS+DRMin) AT STOP TIME
SET (STSS+DRTyp) AS STOP TIME
S46
End

FIG. 8

SOUND PRESSURE LEVEL (dB)
NOISE LEVEL THRESHOLD 1 (THn1)
NOISE LEVEL THRESHOLD 2 (THn2)
SILENT LEVEL THRESHOLD (THs)
NOISE SECTION 1
NOISE SECTION 2
SILENT SECTION
TIME

FIG. 9
RECORDING SIGNAL PROCESSOR
RECORDING CONTROL UNIT
DIGEST ADDRESS GENERATOR
RECORDING/ REPRODUCING DEVICE
REPRODUCTION CONTROL DEVICE
DIGEST ADDRESS REPRODUCING DEVICE
REPRODUCING SIGNAL PROCESSOR
SOUND LEVEL DETECTOR
DURATION TIMER
REFERENCE SOUND LEVEL
DIGEST DISPLAY PART DETECTION DEVICE
+
−
1
2
3
4
5
6
7
8
9
10
11
12
13